# FASCICULE DE BREVET EUROPEEN

(11) **EP 0 717 168 B1**
(45) Date de publication et mention de la délivrance du brevet: **01.07.1998**
(21) Numéro de dépôt: 95402803.1
(22) Date de dépôt: 13.12.1995
(51) Int. Cl.: F01D 5/30

(54) **Dispositif de fixation axiale d'aubes de rotor de turboréacteur**
Vorrichtung zur Axialbefestigung von Schaufeln eines Strahlturbinenrotors
Arrangement for the axial fastening of the rotor blades of a turboreactor

(30) Priorité: 14.12.1994 FR 9415044
(43) Date de publication de la demande: 19.06.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Adde, Danielle C.R., F-77240 Cesson (FR); Gougeon, Philippe F.P., F-77300 Fontainebleau (FR); Charbonnel, Jean-Louis, F-77310 Boissise le Roi (FR); Miraucourt, Gérard G., F-77170 Brie Comte Robert (FR)

(56) Documents cités:
- EP-A- 0 083 289
- FR-A- 2 345 605
- GB-A- 1 141 280
- GB-A- 1 491 480
- US-A- 2 928 651
- US-A- 5 350 279

## Description

### Domaine de l'invention

La présente invention concerne les turbomachines à flux axial, tels que les turboréacteurs utilisés sur les avions civils ou militaires. Elle concerne plus précisément la fixation des aubes du rotor d'un turboréacteur.

Cette application de l'invention aux turboréacteurs est un exemple de réalisation et ne constitue en aucun cas une limitation quant aux utilisations possibles du dispositif selon l'invention.

### Art antérieur et problème posé

Dans le cadre de la construction des moteurs à turbines à gaz, telles que les turboréacteurs, la fixation des aubes du rotor se fait souvent par insertion du pied de l'aube dans un alvéole du disque du rotor. Le positionnement axial des aubes est souvent réalisé au moyen d'un jonc élastique de 360° et fendu. Il est positionné dans les gorges constituées par des becquets usinés dans la face amont du disque et sur une face amont des pieds des aubes.

Or, lors du fonctionnement de la turbomachine, les aubes exercent un effort important vers l'aval et pincent de ce fait le jonc sur la face amont du disque. En même temps, ce dernier gonfle en épaisseur et en diamètre sous l'action des variations de température et de la force centrifuge. Ce phénomène est accentué lorsque les aubes sont engagées dans des alvéoles inclinés par rapport à l'axe moteur. L'action conjuguée de ces différents phénomènes crée des contraintes inacceptables sur la périphérie du disque et sur le jonc et abrège la durée de vie de ces éléments.
Le but de l'invention est de remédier à ces inconvénients en proposant une solution différente pour la fixation axiale des aubes.

On connaît par ailleurs par US-A-2.928.651 un dispositif de fixation axiale d'aubes de rotor d'une turbomachine, chaque aube ayant un pied radialement broché dans une rainure axiale du disque du rotor, comprenant des moyens de positionnement axial de l'aube constitués d'une rainure de positionnement axial, d'une cale de positionnement possédant un crochet pénétrant dans la rainure du pied, cette cale étant elle-même positionnée axialement par rapport au disque et la cale est souple, de manière à permettre sa mise en place et son retrait et ainsi le démontage et le montage de l'aube.
Selon l'invention, dans une première réalisation principale, les moyens de positionnement du dispositif selon l'invention comprennent une plaquette engagée dans un becquet amont de l'aube et dans deux becquets amont intermédiaires et fixes du disque, la plaquette immobilisant ainsi l'aube en translation axiale, une partie de la cale se trouvant en-dessous de la plaquette pour la maintenir dans la position verrouillée.

Dans ce cas, la cale possède de préférence un évidement longitudinal pour permettre le passage d'une tige de manoeuvre.

la plaquette peut également posséder deux tenons de blocage en rotation entre lesquels la cale est positionnée.

Dans une deuxième réalisation, la cale possède une extrémité aval équipée d'une butée qui prend appui sur la face aval du pied de l'aube, un becquet étant prévu en amont du pied de l'aube pour prendre appui sur la face amont du disque.

### Liste des figures

L'invention et ses différentes caractéristiques seront mieux comprises à la lecture de la description suivante, annexée de plusieurs figures représentant respectivement :
- figure 1, en coupe longitudinale, le dispositif selon l'invention dans sa première réalisation ;
- figure 2, en vue frontale, la réalisation de la figure 1 ;
- figure 3, en vue cavalière, la cale utilisée dans la première réalisation des figures 1 et 2 ;
- figure 4, en coupe longitudinale, une deuxième réalisation du dispositif selon l'invention ;
- figure 5, en vue frontale, la réalisation de la figure 4 ; et
- figure 6, en vue cavalière, la cale utilisée dans la deuxième réalisation de l'invention aux figures 4 et 5.

### Description de deux réalisations de l'invention

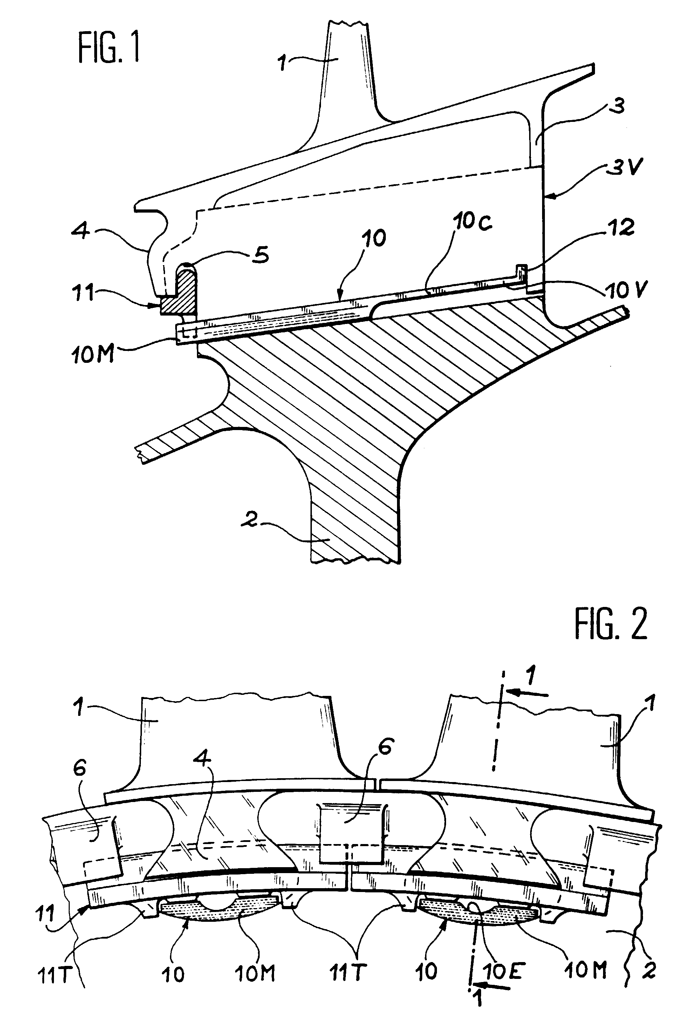

Sur la figure 1, on distingue en haut la partie inférieure de l'aube 1, ainsi que son pied 3. On y distingue en dessous le disque 2 du rotor sur lequel est fixée l'aube 1.

Cette vue étant une coupe longitudinale, l'alvéole dans lequel est fixé le pied 3 de l'aube 1 n'est pas représenté, si ce n'est par la cavité dans laquelle se trouve le pied. Par contre, des moyens de positionnement axial de l'aube 1 sont utilisés et visualisés sur cette figure.

Dans cette première réalisation, ils comprennent principalement trois éléments qui sont un becquet amont 4 du pied 3 de l'aube 1, une plaquette 11 et une cale 10. En effet, chaque aube 1 possède un becquet amont 4 formant une encoche 5 dans laquelle est placée une plaquette 11.

Or, comme le montre la figure 2, chaque plaquette 11 dépasse de part et d'autre du becquet 4 d'une aube 1 pour venir également prendre appui dans des becquets 6 du disque 2 qui est fixe. On comprend que, s'il n'existe qu'un très faible jeu entre les plaquettes 11 et les becquets 4 et 6, chaque pied 3 sera fixé axialement par rapport au disque 2 qui est fixe.

Le maintien de chaque plaquette 11 dans l'encoche 5 de chaque pied 3 et dans les becquets 6 du disque 2 est obtenu au moyen d'une cale 10 que l'on glisse sous le pied 3, juste au-dessus du disque 2. Cette cale 10 possède une extrémité aval 10V équipée d'un crochet 12 qui est prévu pour venir s'insérer dans une rainure correspondante du pied 3. Ainsi, cette cale 10 est elle-même positionnée axialement par rapport au pied 3. Elle possède une extrémité amont 10M qui dépasse du pied 3, lorsque la cale est mise en place sous ce dernier, le crochet 12 étant en place dans la rainure du pied 3. Ainsi, chaque plaquette 11 ne peut pas s'échapper ou glisser de l'encoche 5 formée par le becquet 4 et le pied 3. Le verrouillage axial de l'aube 1 est ainsi réalisé.

Sur la figure 2, on constate que l'extrémité amont 10M de la cale 10 est relativement large. En fait, cette largeur correspond à l'espace existant entre deux tenons 11T se prolongeant vers le centre de la turbomachine de la plaquette 11. Ainsi, chaque plaquette 11 est maintenue fixe en translation autour de l'axe longitudinal de la machine, c'est-à-dire que l'ensemble des plaquettes ne peut pas tourner autour de cet axe.

En revenant à la figure 1, on constate qu'au moins une partie centrale 10C de la cale 10 a une épaisseur relativement faible. Ceci a pour but de doter la cale 10 d'une flexibilité longitudinale relativement importante. Ceci peut en effet permettre l'insertion d'une cale entre le pied 3 et le disque 2. En effet, cette flexibilité permet à l'extrémité aval 10V d'être fléchie et de pouvoir être introduite, malgré le crochet 12 dans l'espace existant entre le pied 3 et le disque 2. La cale 10 est ainsi mise en place, le crochet 12 pénétrant dans la rainure de positionnement axial du pied 3, grâce à l'élasticité de la cale 10.

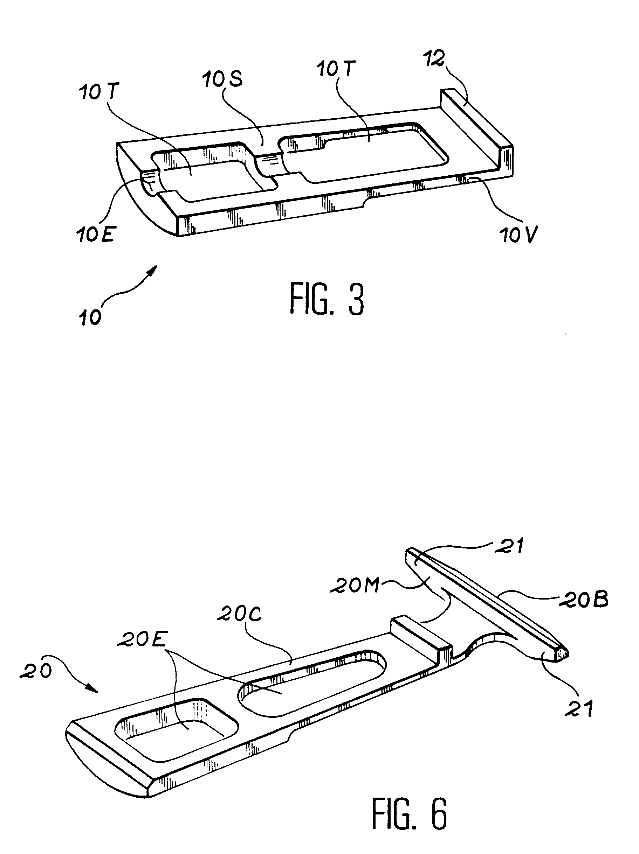

De même, le retrait de cette cale 10 peut être obtenu en obtenant le flèchissement de l'extrémité aval 10V de la cale 10 pour que le crochet 12 soit dégagé de la rainure de positionnement axial du pied 3. Comme le montre la figure 3, l'extrémité amont 10M possède un évidement 10E longitudinal et en forme de segment circulaire sur la surface supérieure de la cale 10, en regard du pied 3. Ainsi, une tige rigide peut être glissée dans cet évidement 10E, de manière à provoquer le fléchissement de l'extrémité de l'extrémité aval 10V de la cale 10 et le désengagement du crochet 12 par rapport à la rainure du pied 3. La cale 10 peut ainsi être retirée. Ceci a pour effet de permettre le retrait de la plaquette 11 et le démontage de l'aube 1 par rapport au disque 2.

La figure 3 permet de mieux se rendre compte de la forme que peut avoir une telle cale 10. En effet, on y retrouve le crochet 12 placé en extrémité aval 10V, l'évidement 10E placé au centre, sur la surface supérieure 10S, permettant le démontage de la cale 10. Des trous centraux 10C placés au milieu de celle-ci permettent d'obtenir également l'élasticité de cette cale.

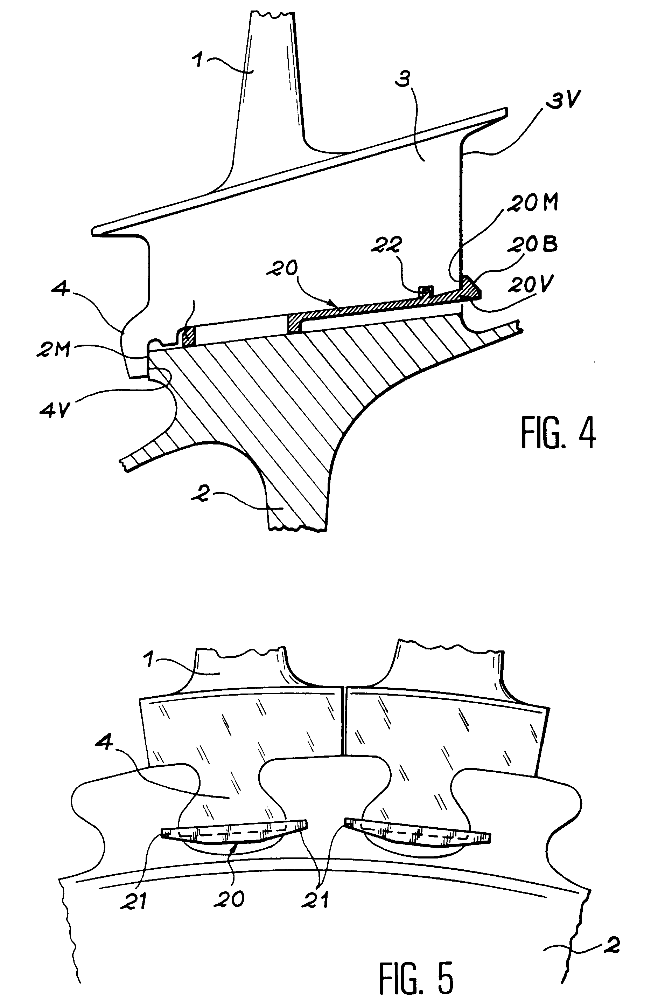

Dans une deuxième réalisation, et en référence à la figure 4, l'aube 1 possède toujours un pied 3 à fixer sur le disque 2 du rotor. Le pied 3 possède toujours un becquet 4 placé en amont de celui-ci. Ce becquet 4 fait saillie vers le bas de la figure, c'est-à-dire vers l'axe longitudinal de la turbomachine, de manière à ce que sa surface aval 4V soit en regard de la surface amont 2M du disque 2. Ce contact constitue une butée et permet d'assurer le positionnement axial du pied 3 et de son aube 1, tout du moins dans un sens.

Une cale 20 est également utilisée et placée en-dessous du pied 3 et au-dessus du disque 2. Par contre, la plaquette 11 de la première réalisation est supprimée. En effet, ici, la cale 20 permet d'obtenir le positionnement axial du pied 3 et de l'aube 1 dans l'autre sens axial. En d'autres termes, la cale 20 a également une fonction de butée axiale. Comme on peut le constater, à son extrémité aval 20V, se trouve une butée 20B dont la surface amont 20M est placée en regard de la surface aval 3V du pied 3. De plus, la cale 20 possède un crochet 22 faisant saillie, comme le crochet 12 de la réalisation précédente, vers le haut, c'est-à-dire vers une rainure du pied 3 dans laquelle il peut être introduit.

La figure 4 montre l'ensemble en position verrouillée, c'est-à-dire que le crochet 22 se trouve dans la rainure du pied 3 et que la surface amont 20M de la butée 20B se trouve contre la surface aval 3V du pied 3.

Or, comme le montre la figure 6 représentant la cale 20, cette butée 20B possède des prolongements 21 s'étendant de part et d'autre de celle-ci. Il en est de même pour la surface amont 20M de celle-ci.

Ainsi, comme le montre la figure 5, au niveau des prolongements 21, la surface amont 20M peut prendre appui contre la surface aval du disque 2 tout en prenant également appui contre la surface 3V du pied 3.

On constate qu'ainsi la cale 20 immobilise en translation axiale le pied 3 par rapport au disque 2, en coopérant avec le becquet amont 4 de ce dernier.

Comme on peut le constater sur la figure 6, une partie centrale 20C de la cale 20 peut être amincie et posséder des évidements 20E pour obtenir une élasticité suffisante permettant à la cale 20 d'être fléchie. Ainsi, lorsque le pied 3 est installé sur le disque 2, la cale 20 peut être insérée par son extrémité amont 20M entre ces deux pièces. La flexiblité de celle-ci permet au crochet 22 d'y être également inséré jusqu'au moment où ce dernier vient dans la rainure du pied 3. La cale 20 est alors mise en position de verrouillage et l'ensemble du pied 3 et de l'aube 1 est fixé sur le disque 2.

Pour le démontage de l'aube 1, il suffit de faire fléchir l'extrémité aval 20V, grâce à la flexibilité de la cale 20 et de dégager ainsi le crochet 22 de la rainure du pied 3. La cale 20 est alors retirée et l'aube 1 est libérée.

Le dispositif selon l'invention permet la fixation individuelle des aubes les unes indépendamment des autres. Il évite également des phénomènes de contraintes locales rencontrées à la périphérie du disque et du jonc fréquemment utilisé. Il permet également le montage et le démontage des aubes.

## Revendications

1. Dispositif de fixation axiale d'aubes (1) du rotor d'une turbomachine, chaque aube (1) ayant un pied (3) radialement broché dans une rainure axiale du disque (2) du rotor, chaque pied (3) possédant des moyens de positionnement axial de l'aube (1) comprenant une rainure de positionnement axial d'une cale (10) de positionnement qui possède un crochet (12) pénétrant dans la rainure de positionnement du pied (3), cette cale (10) étant positionnée axialement sur le disque (2), et souple, de manière à permettre sa mise en place et son retrait pour le montage et le démontage de l'aube (1), la cale (10) étant glissée au montage entre le pied (3) de l'aube (1) et le fond de la rainure du disque (2) et positionnée axialement par son crochet (12) pénétrant dans la rainure de positionnement axial (3), caractérisé en ce que pour chaque aube (1), les moyens de positionnement comprennent une plaquette (11) engagée dans un becquet amont (4) de l'aube (1) et dans deux becquets amont (6) intermédiaires et fixes du disque (2), la plaquette (11) immobilisant ainsi l'aube (1) en translation axiale, une extrémité amont (10M) de la cale (10) se trouvant en-dessous de la plaquette (11) pour la maintenir dans sa position de verrouillage.

2. Dispositif selon la revendication 1, caractérisé en ce que la cale (10) possède un évidement longitudinal (10E) pour permettre le passage d'une tige de manoeuvre et le démontage de l'ensemble.

3. Dispositif selon la revendication 1, caractérisé en ce que la plaquette (11) possède deux tenons (11T) de blocage en rotation entre lesquels la cale (10) est positionnée.

4. Dispositif de fixation axiale d'aubes (1) du rotor d'une turbomachine, chaque aube (1) ayant un pied (3) radialement broché dans une rainure axiale du disque (2) du rotor, chaque pied (3) possédant des moyens de positionnement axial de l'aube (1) comprenant une rainure de positionnement axial d'une cale (20) de positionnement qui possède un crochet (22) pénétrant dans la rainure de positionnement du pied (3), cette cale (20) étant positionnée axialement sur le disque (2), et souple, de manière à permettre sa mise en place et son retrait pour le montage et le démontage de l'aube (1), la cale (20) possédant une extrémité aval (20V) équipée d'une butée (20B) qui prend appui sur la face aval du disque (2), caractérisé en ce que ladite butée (20B) de la cale (20) prend appui sur la face aval (3V) du pied (3) de l'aube (1), un becquet amont (4) étant prévu en amont du pied (3) de l'aube (1) pour prendre appui sur la face amont (2M) du disque (2).

## Patentansprüche

1. Vorrichtung zur Axialbefestigung von Schaufeln (1) eines Rotors einer Turbomaschine, wobei jede Schaufel (1) einen Fuß (3) aufweist, der radial in einer Axialnut der Scheibe (2) des Rotors verstiftet ist, wobei jeder Fuß (3) Mittel zur Axialpositionierung der Schaufel (1) besitzt, die eine Nut zur Axialpositionierung eines Positionierkeils (10) aufweisen, der einen Haken (12) besitzt, der in die Positioniernut des Fußes (3) eingreift, wobei der Keil (10) axial und elastisch an der Scheibe (2) positioniert ist, um seine Anbringung und sein Zurückziehen zur Montage oder Demontage der Schaufel (1) zu gestatten, wobei der Keil (1) bei der Montage zwischen dem Fuß (3) und der Schaufel (1) und dem Grund der Nut der Schaufel (2) geschoben wird und axial durch seinen Haken (12) positioniert wird, der in die Nut zur Axialpositionierung (3) eingreift,
dadurch **gekennzeichnet,**
daß für jede Schaufel (1) die Positioniermittel eine Platte (11) aufweisen, die in eine stromaufseitige Randlippe (4) der Schaufel (1) und in zwei stromaufstige Zwischenrandlippen (6) eingreift, die mit der Scheibe (2) fest verbunden sind, wobei die Platte (11) somit die Schaufel (1) gegenüber einer Axial-Translationsbewegung blockiert, wobei ein stromaufseitiges Ende (10M) des Keils (10) sich unterhalb der Platte (11) befindet, um diese in ihrer Verriegelungsposition zu halten.

2. Vorrichtung nach Anspruch 1,
dadurch **gekennzeichnet,**
daß der Keil (10) eine Längsausnehmung (10E) aufweist, um den Durchlaß eines Bedienschafts und die Demontage der Anordnung zu gestatten.

3. Vorrichtung nach Anspruch 1,
dadurch **gekennzeichnet,**
daß die Platte (11) zwei Rotations-Blockiernasen (11T) aufweist, zwischen denen der Keil (10) liegt.

4. Vorrichtung zur Axialbefestigung von Schaufeln (1) eines Rotors einer Turbomaschine, wobei jede Schaufel (1) einen Fuß (3) aufweist, der radial in einer Axialnut der Scheibe (2) des Rotors verstiftet ist, wobei jeder Fuß (3) Mittel zur Axialpositionierung der Schaufel (1) aufweist, die eine Nut zur Axialpositionierung eines Positionierkeils (20) aufweisen, der einen Haken (22) besitzt, der in der Positioniernut des Fußes (3) eingreift, wobei dieser Keil (20) axial und elastisch an der Scheibe (2) angebracht ist, um seine Anbringung und sein Zurückziehen für die Montage und Demontage der Schaufel (1) zu ermöglichen, wobei der Keil (20) ein stromabseitiges Ende (20V) aufweist, das mit einem Anschlag (20B) versehen ist, der sich an der stromabseitigen Fläche der Scheibe (2) abstützt,
dadurch **gekennzeichnet,**
daß der Anschlag (20B) des Keils (20) sich an der stromabseitigen Fläche (3V) des Fußes (3) der Schaufel (1) abstützt, wobei eine stromaufseitige Randlippe (4) stromaufwärts des Fußes (3) der Schaufel (1) vorgesehen ist, um sich an dem stromaufseitigen Fläche (2M) der Scheibe (2) abzustützen.

## Claims

1. Device for the axial fastening of blades (1) of the rotor of a turbine engine, each blade (1) having a root (3) radially pinned in an axial groove of the disc (2) of the rotor, each root (3) possessing means for the axial positioning of the blade (1), the said means comprising a groove for the axial positioning of a positioning wedge (10) which possesses a hook (12) penetrating into the groove for the positioning of the root (3), this wedge (10) being positioned axially on the disc (2) and being flexible, so as to make it possible to install and remove the said wedge for the purpose of mounting and demounting the blade (1), during mounting the wedge (10) being slipped between the root (3) of the blade (1) and the bottom of the groove of the disc (2) and being positioned axially by means of its hook (12) penetrating into the axial positioning groove (3), characterized in that, for each blade (1), the positioning means comprise an insert (11) engaged in an upstream nose (4) of the blade (1) and in two intermediate and fixed upstream noses (6) of the disc (2), the insert (11) thus immobilizing the blade (1) in terms of axial transitional motion, an upstream end (10M) of the wedge (10) being located underneath the insert (11) in order to keep the latter in its locking position.

2. Device according to Claim 1, characterized in that the wedge (10) possesses a longitudinal recess (10E) for allowing the passage of an operating rod and to make it possible to demount the assembly.

3. Device according to Claim 1, characterized in that the insert (11) possesses two studs (llT) for rotational blocking, between which stands the wedge (10) is positioned.

4. Device for the axial fastening of blades (1) of the rotor of a turbine engine, each blade (1) having a root (3) radially pinned in an axial groove of the disc (2) of the rotor, each root (3) possessing means for the axial positioning of the blade (1), the said means comprising a groove for the axial positioning of a positioning wedge (20) which possesses a hook (22) penetrating into the groove for the positioning of the root (3), this wedge (20) being positioned axially on the disc (2) and being flexible, so as to make it possible to install and remove the said wedge for the purpose of mounting and demounting the blade (1), the wedge (20) possessing a downstream end (20V) equipped with a stop (20B) which bears on the downstream face of the disc (2), characterized in that the said stop (20B) of the wedge (20) bears on the downstream face (3V) of the root (3) of the blade (1), an upstream nose (4) being provided upstream of the root (3) of the blade (1) in order to bear on the upstream face (2M) of the disc (2).
